(19) Europäisches Patentamt / European Patent Office / Office européen des brevets

(11) **EP 4 258 796 A1**

(12) **EUROPEAN PATENT APPLICATION**
published in accordance with Art. 153(4) EPC

(43) Date of publication:
**11.10.2023 Bulletin 2023/41**

(21) Application number: **21918287.0**

(22) Date of filing: **13.01.2021**

(51) International Patent Classification (IPC):
***H04W 74/08*** (2009.01)

(52) Cooperative Patent Classification (CPC):
**H04W 74/08; Y02D 30/70**

(86) International application number:
**PCT/CN2021/071551**

(87) International publication number:
**WO 2022/151072 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• ZUO, Zhisong
  **Dongguan, Guangdong 523860 (CN)**
• HE, Chuanfeng
  **Dongguan, Guangdong 523860 (CN)**

(74) Representative: **Ipside**
**7-9 Allées Haussmann**
**33300 Bordeaux Cedex (FR)**

(54) **INFORMATION TRANSMISSION METHOD, TERMINAL DEVICE, NETWORK DEVICE, AND COMPUTER STORAGE MEDIUM**

(57) Embodiments of the present application provide an information transmission method. The method comprises: a terminal device receives first indication information, the first indication information being used for indicating a transmission parameter of target information in a random access process; the terminal device transmits the target information on the basis of the transmission parameter in the random access process. The embodiments of the present application further provide a terminal device, a network device, and a storage medium.

**FIG. 3**

**Description**

TECHNICAL FIELD

The present disclosure relates to the field of communication technology, and in particular, to a method for transmitting information, a terminal device, a network device, and a computer storage medium.

BACKGROUND

Random access is a necessary process for establishing wireless link between a terminal device and a network device. Only after the random access procedure is completed, the network device and the terminal device can perform general data transmission.

Due to the limited processing capability of the terminal device, a coverage of signal during a random access procedure is limited, for example, the coverage of random access message 3 (Msg3) is limited. As a result, the access procedure is easily restarted, which increases the delay and power consumption of random access of the terminal device. Therefore, how to flexibly perform random access and improve transmission coverage is an urgent problem to be solved.

SUMMARY

In embodiments of the present disclosure, there is provided a method for transmitting information, a terminal device, a network device, and a computer storage medium.

In a first aspect, the embodiments of the present disclosure provide a method for transmitting information. The method includes the following operations.

The terminal device receives first indication information, the first indication information being used for indicating a transmission parameter for target information during a random access procedure.

The terminal device transmits the target information based on the transmission parameter during the random access procedure.

In a second aspect, the embodiments of the present disclosure provide a method for transmitting information. The method includes the following operations.

The network device sends first indication information, the first indication information being used for indicating a transmission parameter for target information during a random access procedure.

The network device transmits the target information based on the transmission parameter.

In a third aspect, the embodiments of the present disclosure provide a terminal device, which includes a first communication unit.

The first communication unit is configured to receive first indication information, the first indication information being used for indicating a transmission parameter for target information during a random access procedure; and transmit the target information based on the transmission parameter during the random access procedure.

In a fourth aspect, the embodiments of the present disclosure provide a network device, which includes a second communication unit.

The second communication unit is configured to send first indication information, the first indication information being used for indicating a transmission parameter for target information during a random access procedure; and transmit the target information based on the transmission parameter.

In a fifth aspect, the embodiments of the present disclosure provide a terminal device, which includes a first transceiver, a first processor, and a first memory for storing a computer program.

The first transceiver, the first processor and the first memory communicate through a first communication bus.

The first processor is configured to communicate with a network device through the first transceiver.

The first processor is further configured to cooperate with the first transceiver to implement, when running the computer program stored in the first memory, the operations of the method for transmitting information of the first aspect.

In a sixth aspect, the embodiments of the present disclosure provide a network device, which includes a second transceiver, a second processor, and a second memory for storing a computer program.

The second transceiver, the second processor and the second memory communicate through a second communication bus.

The second processor is configured to communicate with the terminal device through the second transceiver.

The second processor is further configured to cooperate with the second transceiver to implement, when running the computer program stored in the second memory, the operations of the method for transmitting information of the second aspect.

In a seventh aspect, the embodiments of the present disclosure provide a computer-readable storage medium, having stored thereon a computer program. The computer program is executed by a first processor to implement the

EP 4 258 796 A1

operations of the method of the first aspect; or the computer program is executed by a second processor to implement the operations of the method of the second aspect.

According to the method for transmitting information, the terminal device, the network device and the computer storage medium provided by the embodiments of the present disclosure, the terminal device receives first indication information, the first indication information being used for indicating a transmission parameter for target information during a random access procedure; and the terminal device transmits the target information based on the transmission parameter during the random access procedure. That is, the terminal device may determine a transmission manner for information in the random access procedure according to the first indication information, thereby realizing flexible random access and improving transmission coverage.

BRIEF DESCRIPTION OF THE DRAWINGS

FIG. 1 is a schematic flowchart of a random access provided by an embodiment of the present disclosure.
FIG. 2 is a schematic diagram of a wireless communication system provided by an embodiment of the present disclosure.
FIG. 3 is a first schematic flowchart of a method for transmitting information provided by an embodiment of the present disclosure.
FIG. 4 is a schematic diagram of a time-frequency structure in a repeated transmission procedure provided by an embodiment of the present disclosure.
FIG. 5 is a schematic diagram of a time-frequency structure in a random access procedure provided by an embodiment of the present disclosure.
FIG. 6 is a second schematic flowchart of a method for transmitting information provided by an embodiment of the present disclosure.
FIG. 7 is a schematic diagram of an exemplary MAC layer signaling format provided by an embodiment of the present disclosure.
FIG. 8 is a first schematic block diagram of a terminal device provided by an embodiment of the present disclosure.
FIG. 9 is a second schematic block diagram of a terminal device provided by an embodiment of the present disclosure.
FIG. 10 is a first schematic block diagram of a network device provided by an embodiment of the present disclosure.
FIG. 11 is a second schematic block diagram of a network device provided by an embodiment of the present disclosure.

DETAILED DESCRIPTION

In order to make the purpose, technical solution and advantages of the present disclosure clearer, the embodiments of the present disclosure will be described in further detail below in conjunction with the accompanying drawings, which are provided for illustration only and are not intended to limit the embodiments of the present disclosure.

It should be noted that the terms "first", "second", etc. in the description, claims and the above drawings of the present disclosure are used to distinguish different objects, and are not used to describe a particular order. Furthermore, the terms "including/comprising" and "having" and any variations thereof are intended to cover non-exclusive inclusion. For example, a process, method, system, product, or device that includes a series of operations or units is not limited to the listed operations or units, but optionally also includes steps or units that are not listed, or optionally also includes other operations or units inherent to these processes, methods, products, or devices.

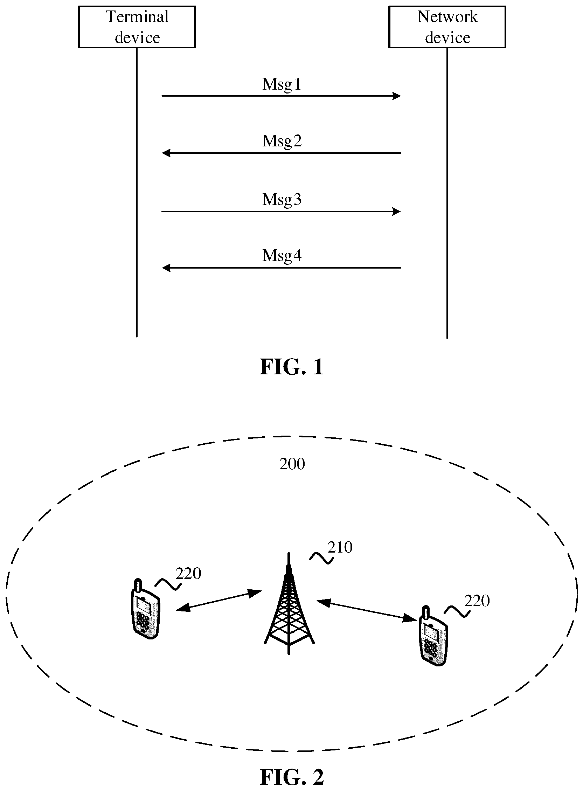

New radio (NR) system supported by the 5th generation (5G) technology is similar to the long term evolution (LTE) system and both support random access procedure. Similar to LTE, referring to the flowchart illustrated in FIG. 1, the random access procedure of NR is divided into four steps.

First step: a terminal device sends message 1 (Msg1) to a network device, and the Msg1 includes one or more preambles.

Second step: the network device sends a random access message 2 (Msg2). Specifically, after receiving the Msg1, the network device responds to the terminal device through Msg2. Msg2 indicates that the preamble(s) was received.

Third step: the terminal device sends Msg3 to the network device. After receiving Msg2 correctly, the terminal device sends Msg3 using uplink (UL) grant resources indicated by Msg2.

Fourth step: the network device sends a random access message 4 (Msg4) to the terminal device. Here, the network device and the terminal device complete contention resolution through Msg 4, and the random access procedure is ended.

In NR design, it has higher requirements on the processing capability of the terminal device and antenna efficiency of the terminal device. When a wearable product standard is introduced into NR, the efficiency of the antenna will significantly decrease due to the limited processing capability of wearable devices and the limited transmission capability of antennas, which will affect the communication performance (especially the coverage performance) of uplink and downlink channels in the transmission process.

Particularly, in the random access procedure, all signals are transmitted in a fixed time unit, and there is no corresponding timing mechanism to repeated transmission. Therefore, the coverage performance of signals cannot be guaranteed in the random access procedure, resulting that the access procedure is easily restarted, which increases the delay and power consumption of random access for the terminal device. In addition, the signals in the random access procedure cannot be adapted according to device types. Thus, it is also difficult to guarantee the coverage of subsequent signal transmission.

Based on this, the embodiments of the present disclosure provide a method for transmitting information. Specifically, the terminal device receives first indication information, the first indication information being used for indicating a transmission parameter for target information during a random access procedure; and the terminal device transmits the target information based on the transmission parameter during the random access procedure. That is, the terminal device may determine the transmission manner of information in the random access procedure according to the first indication information, thereby realizing flexible random access and improving transmission coverage.

The technical solution of the embodiments of the present disclosure may be applied to various communication systems. For example, global system of mobile communication (GSM) system, code division multiple access (CDMA) system, wideband code division multiple access (WCDMA) system, general packet radio service (GPRS) system, long term evolution (LTE) system, LTE frequency division duplex (FDD) system, LTE time division duplex (TDD) system, universal mobile telecommunication system (UMTS), worldwide interoperability for microwave access (WiMAX) communication system or NR system.

FIG. 2 illustrates a wireless communication system 200 applied in embodiments of the present disclosure. The wireless communication system 200 may include a network device 210. The network device 210 may be a device that communicates with terminal devices. The network device 210 may provide communication coverage for a particular geographic area and may communicate with terminal devices (e.g. UE) located within the coverage area. Optionally, the network device 210 may be a base transceiver station (BTS) in a GSM system or a CDMA system, a NodeB (NB) in a WCDMA system, an evolution NodeB (eNB or eNodeB) in an LTE system, or a wireless controller in a cloud radio access network (CRAN), or the network device may be a relay station, an access point, an in-vehicle device, a wearable device, a network-side device in a 5G network or a network device in a future evolved public land mobile network (PLMN), etc.

The wireless communication system 200 also includes at least one terminal device 220 located within the coverage area of the network device 210. The terminal device 220 may be mobile or fixed. Optionally, the terminal device 220 may refer to an access terminal, User Equipment (UE), a user unit, a user station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, a wireless local loop (WLL) station, a personal digital assistant (PDA), a handheld device with wireless communication function, a computing device or other processing device connected to wireless modem, an in-vehicle device, a wearable device, a terminal device in future 5G network or a terminal device in the future evolved PLMN, etc.

FIG. 2 exemplarily illustrates a network device and two terminal devices. Optionally, the wireless communication system 200 may include multiple network devices and other numbers of terminal devices may be included within the coverage of each network device, which is not limited by embodiments of the present disclosure.

Optionally, the wireless communication system 200 may also include other network entities such as network controllers, mobility management entities and the like, which are not limited by the embodiments of the present disclosure.

It should be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

The technical solution in the embodiments of the present disclosure will be clearly and completely described below in conjunction with the accompanying drawings in the embodiments of the present disclosure.

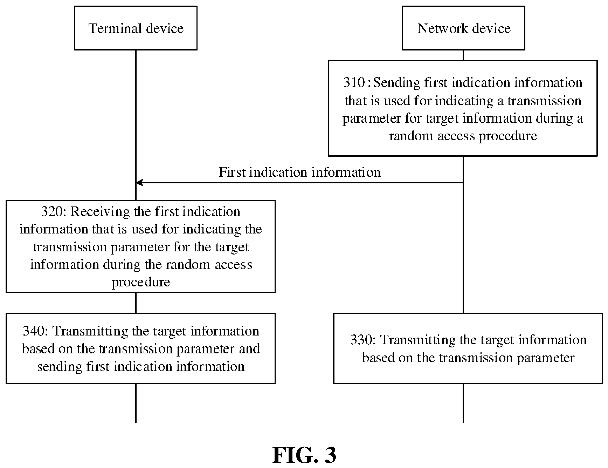

An embodiment of the present disclosure provides a method for transmitting information. With reference to the flow diagram illustrated in FIG. 3, the method includes operation 310 and operation 340.

At operation 310, the network device sends first indication information, the first indication information being used for indicating a transmission parameter for target information during a random access procedure.

In an embodiment of the present disclosure, the network device may send the first indication information to the terminal device to indicate the transmission parameter for the target information during the random access procedure that is initiated by the terminal device to the network device.

At operation 320, the terminal device receives the first indication information.

In an embodiment of the present disclosure, the terminal device may receive the first indication information from the network device, and determine the transmission parameter for the target information when random access of the terminal device to the network device is performed according to the first indication information.

It may be understood that the target information refers to information that is transmitted when the terminal device initiates the random access procedure to the network device.

In a possible implementation, the target information may include at least one of the following:

data information and/or control information of random access message 2 (i.e., Msg2);
data information and/or control information of random access message 3 (i.e., Msg3);
data information and/or control information of random access message 4 (i.e., Msg4); and
control information of a feedback message corresponding to the Msg4.

In short, the first indication information may indicate transmission parameters for data information and/or control information of Msg2/3/4.

Msg2 is downlink information, the data information of Msg2 may be physical downlink shared channel (PDSCH) of Msg2, and the control information of Msg2 may be physical downlink control channel (PDCCH) of Msg2.

Similarly, Msg3 is uplink information, the data information of Msg3 may be physical uplink shared channel (PUSCH) of Msg3, and the control information of Msg3 may be physical uplink control channel (PUCCH) of Msg3.

The data information of Msg4 may be PDSCH of Msg4, and the control information of the Msg4 may be PDCCH of Msg4.

In addition, the first indication information may also indicate the transmission parameters for the PUCCH associated with Msg4, i.e. the transmission parameters for the control information of the feedback message corresponding to the Msg4.

In a possible implementation, the transmission parameter include at least one of:

an aggregation factor for transmitting the target information;
a frequency domain position of frequency hopping for transmitting the target information;
a modulation parameter for transmitting the target information; and
resources for transmitting the target information.

In embodiments of the present disclosure, a plurality of time domain resources may be aggregated by an aggregation factor for repeated transmission of information. The coverage of the information may be enhanced by repeated transmission for many times.

Here, the aggregation factor may be understood as the number of times that information is transmitted repeatedly, and may be defined by using the number of time domain units. That is to say, the aggregation factor specifically refers to the number of repetitions of repeated transmission of target information in a time domain unit. The time domain unit may be a slot, an orthogonal frequency division multiplexing (OFDM) symbol, an OFDM symbol group, or the number of repetitions in other time domains.

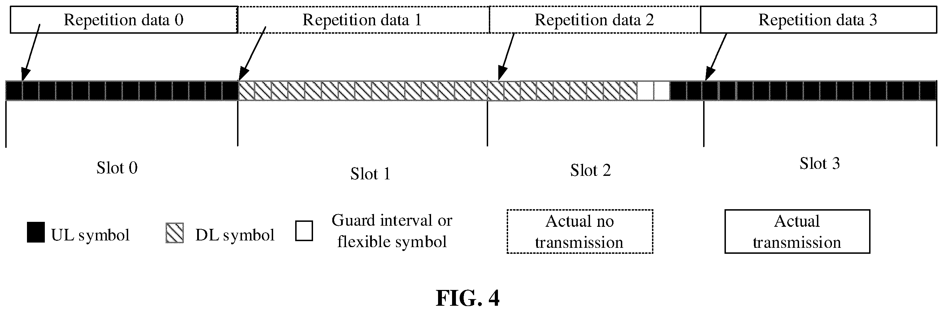

For example, the aggregation factor may take a value of 1, 2, 4, 8 or 16, representing the target information is repeatedly transmitted for 1, 2, 4, 8 or 16 slots, respectively. Specifically, when the value of the aggregation factor is 4 slots, the same information may be transmitted on consecutive 4 slots with reference to the schematic diagram of repeated transmission illustrated in FIG. 4. When the available symbols of slots do not meet the requirements, the repetition on the slots is ignored, that is, slot 1 and slot 2 are downlink transmission resources and cannot be used for uplink transmission, so the information on slot 1 and slot 2 may be ignored.

In addition, in embodiments of the present disclosure, the transmission parameter may also include a frequency domain position of frequency hopping for transmitting the target information. Specifically, the position of frequency hopping may include a resource block index and/or offset of the frequency hopping.

In embodiments of the present disclosure, the modulation parameters may include information such as modulation order limits of the target information. The resources for transmitting the target information may include frequency domain and time domain positions of the resource mapping corresponding to transmitting the target information.

At operation 330, the network device transmits the target information based on the transmission parameter.

At operation 340, the terminal device transmits the target information based on the transmission parameter.

In embodiments of the present disclosure, the target information is interactive information between the network device and the terminal device. Therefore, after the network device and the terminal device determine the transmission parameter for the target information, the interaction of the target information is performed based on the transmission parameter.

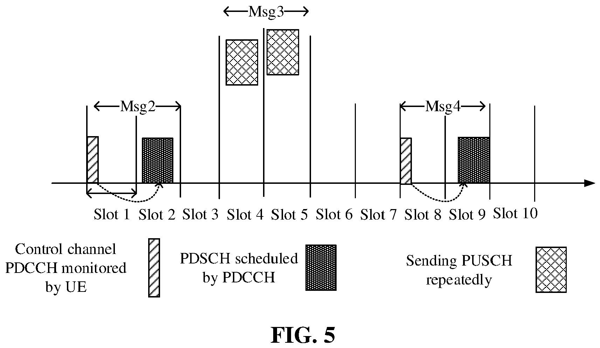

As an example, with reference to the time-frequency structure diagram illustrated in FIG. 5, the terminal device determines that the aggregation factor of the PUSCH corresponding to Msg3 is 2 slots based on the first indication information from the network device. Thus, the terminal device may repeatedly send the PUSCH corresponding to Msg3 on part of time-frequency resources of slot 4 and slot 5 according to the indication of the first indication information, while the network device repeatedly receives the PUSCH corresponding to Msg3 on the same time-frequency resources of slot 4 and slot 5.

In the embodiments of the present disclosure, the network device may indicate to the terminal device the transmission parameter for target information during the random access procedure, such as the number of repeated transmissions, transmission resources. In this way, the terminal device may repeatedly transmit the target information based on the indication of the network device, i.e., according to the information such as the indicated transmission resources. In this way, the access success rate and robustness of the terminal device are improved in the case of limited capability, such as increased coverage, reduced antenna gain and reduced bandwidth.

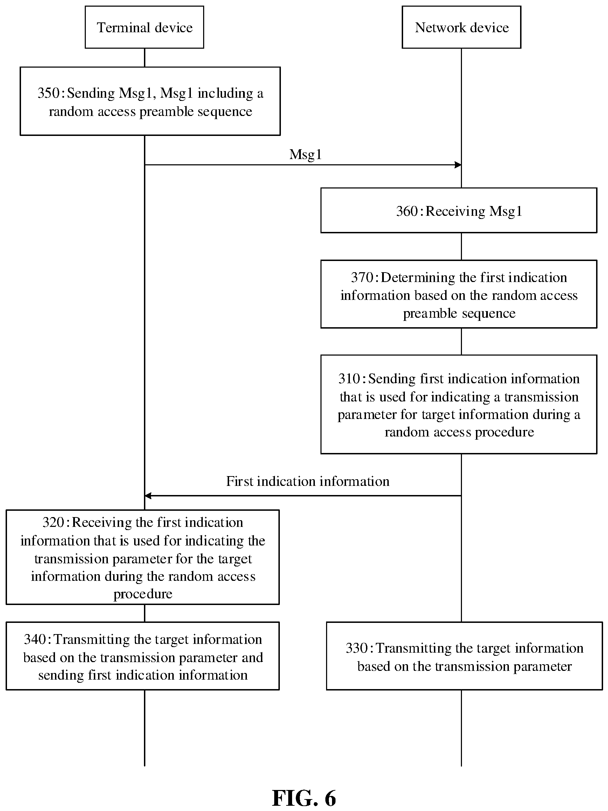

In an embodiment of the present disclosure, with reference to the flowchart illustrated in FIG. 6, before the network device sends the first indication information and the terminal device receives the first indication information, the following operations 350, 360 and 370 may be performed.

At operation 350, the terminal device transmits a random access message 1 (i.e. Msg1) to the network device, the Msg1 including a random access preamble sequence.

At operation 360, the network device receives the Msg1.

At operation 370, the network device determines the first indication information based on the random access preamble sequence.

It may be understood that the terminal device first sends Msg1 to the network device to trigger the random access procedure. After receiving the Msg1, the network device generates first indication information according to the preamble sequence carried by the Msg1.

In a possible implementation, the network device may determine the type/capability of the terminal device based on the preamble sequence carried by the Msg1 and generate the first indication information based on the type/capability of the terminal device.

Here, a plurality of preamble sequences for random access may be divided into a plurality of groups, each of which represents a terminal device type/capability. In this way, the terminal device may determine a group of preamble sequences according to its own type/capability, and then randomly select a preamble sequence from the group of preamble sequences for sending.

Based on this, after receiving the preamble sequence carried by the Msg1, the network device may determine the type/capability of the terminal device according to the preamble sequence, so as to determine the transmission parameter for the target information according to the type/capability of the terminal device, and generate the first indication information for sending.

As an example, terminal devices may be divided into terminal devices having a coverage enhancement capability and terminal devices not having coverage enhancement capability. When a terminal device having the coverage enhancement capability triggers random access, a preamble sequence may be randomly selected from a group of preamble sequences dedicated to the terminal device having coverage enhancement and sent to the network device. The network device may determine that the terminal device may perform coverage enhancement according to the preamble sequence, and the network device may configure the number of repeated transmissions for the terminal device, so that the terminal device enhances the coverage of signal through transmission.

In a possible implementation, in addition to determining the first indication information according to the type/capability of the terminal device, the network device may also determine the transmission parameters for the target information according to factors such as the current network load state, the channel state, etc.

As an example, if the current network load is severe, the network device may configure a small aggregation factor for the terminal device to avoid causing a signaling storm. If the signaling state between the terminal device and the network device is poor, the network device may configure a larger aggregation factor for the terminal device to improve the success rate of random access.

Thus, in the method for transmitting information provided by the embodiments of the present disclosure, transmission parameters of random access may be configured for a terminal device according to the type/capability of the terminal device. In this way, the transmission parameters can be adapted to the type/capability of the terminal device, thereby realizing flexible random access and improving transmission coverage.

The implementation of the network device sending the first indication information to the terminal device according to the embodiments of the present disclosure is described below.

In an embodiment of the present disclosure, the first indication information is carried by medium access control (MAC) layer signaling.

That is, the transmission parameter for the target information may be indicated by MAC layer signaling. That is, the terminal device may determine the transmission parameters for the Msg2/3/4 based on the MAC layer signaling sent by the network device.

Specifically, bits defined by MAC layer information format may be used to indicate transmission parameters.

In a possible implementation, the network device may carry the first indication information through a first field and/or a second field in the MAC layer signaling; and sends the MAC layer signaling to the terminal device. After receiving the MAC signaling, the terminal device determines the first indication information based on the first field and/or the second field in the MAC signaling.

The first field is a reserved field for the MAC layer signaling. The second field is a dedicated field for the MAC layer signaling.

That is, the transmission parameter for the target information may be indicated by the dedicated field or the reserved field in the MAC layer signaling format.

Here, the reserved field may be a field reserved in the MAC layer signaling that has no actual meaning. The dedicated field may be a newly added field in the MAC layer signaling dedicated to indicating the transmission parameter for the target information.

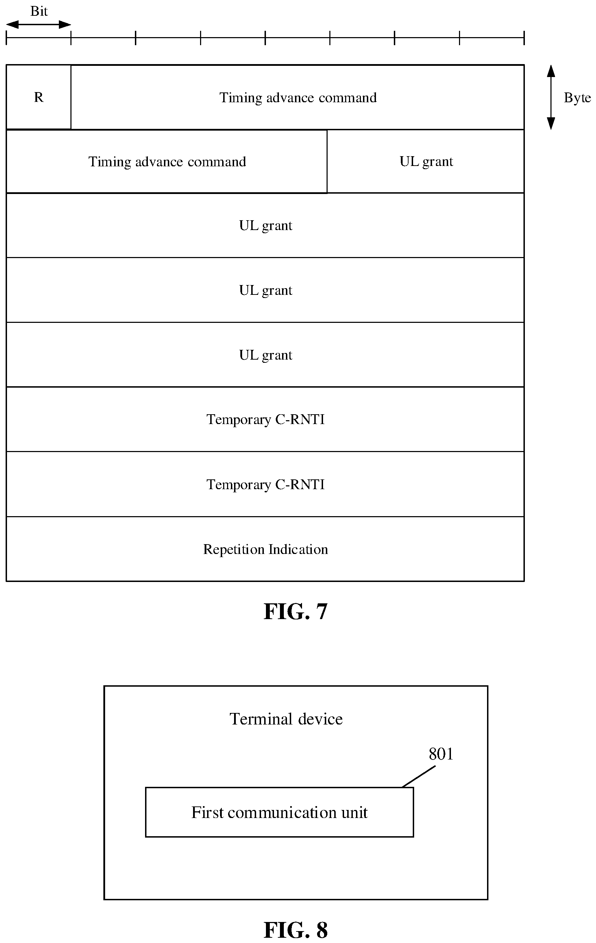

With reference to a schematic diagram of an exemplary MAC layer signaling format illustrated in FIG. 7, in the MAC layer signaling format illustrated in FIG. 7, each row represents one byte, and the byte of each row contains eight bits. As illustrated in FIG. 7, the following fields are included in the MAC layer signaling format:

R: reserved bit, including 1 bit.
Timing advance command: used to indicate timing advance information of uplink transmission and including 13 bits.
Uplink grant: used to indicate uplink transmission resources and including 27 bits.
Temporary cell radio network temporary identifier (Temporary C-RNTI): used to indicate temporary identifier used by the terminal device during random access and including 16 bits.

Optionally, the MAC layer signaling may include a repetition indication field in addition to the above-mentioned fields. Specifically, the repetition indication field is a newly added bit field, and may be used to indicate the transmission parameters for the target information.

In embodiments of the present disclosure, as illustrated in FIG. 7, the first field may be a reserved bit R in MAC layer signaling, and the first field may also be a field reserved in UL Grant for CSI request, that is, CSI request bit. In addition, the second field may be the newly added repetition indication field in FIG. 7.

Optionally, the network device may directly indicate the transmission parameter for the target information to the terminal device through the first field in the MAC layer signaling.

In other words, the network device indicates the transmission parameter for the target information through the reserved bit R in the MAC layer signaling or the CSI request bit.

In a possible implementation, the first field indicates whether the target information is repeated. Specifically, when the value of the first field is a first value (e.g. 0 or 1), the first field is used to indicate that the target information is not transmitted repeatedly, that is, the target information is transmitted on one time domain unit. When the value of the first field is a second value (e.g. 0 or 1), the first field is used to indicate that the aggregation factor is N time domain units, e.g. 16 slots. Here, N is an integer greater than 1.

Further, the value of N is pre-configured by the network device for the terminal device, or the value of N is pre-agreed between the network and the terminal device, which is not limited in the embodiments of the present disclosure.

In a possible implementation, the number of repetitions of the target information is indicated by the first field. Specifically, when the value of the first field is a first value (0 or 1), the first field is used to indicate that the aggregation factor of the target information is N time domain units. When the value of the first field is a second value (0 or 1), the first field is used to indicate that the aggregation factor of the target information is M time domain units. N and M are integers greater than 1, and N is different from M.

Further, N and M may be values pre-configured by the network side or values agreed between the network side and the terminal device, which are not limited in the embodiments of the present disclosure.

Thus, in the embodiments of the present disclosure, transmission parameter for the target information may only be indicated through the reserved field in the MAC layer signaling. In this way, the transmission parameter for the target information may be determined compatible with the existing signaling framework, and the complexity of receiving and processing of the terminal device is reduced.

Optionally, the network device may also indicate, through the first field, whether a third field in the MAC layer signaling is redefined.

Here, the third field may be at least one of the following fields illustrated in FIG. 7: timing advance command, UL grant, and temporary C-RNTI.

If the third field is not redefined, the third field still has its own function, that is, it is still used to carry timing advance information, uplink grant information, temporary identification information, etc. If the third field is redefined, the third field is given a new meaning, which is used to indicate transmission parameter for the target information.

Specifically, when the network device sets the value of the first field in the MAC layer signaling to a first value (e.g. 0 or 1), it indicates that the third field in the MAC layer signaling carries the first indication information, i.e. the third field is redefined. When the network device sets the value of the first field to a second value (e.g. 1 or 0), it indicates that the third field carries at least one of uplink grant information, timing advance information and temporary identification information. In this case, the first value is different from the second value, that is, the third field is not redefined.

In this way, after receiving the MAC layer signaling, the terminal device first reads the value of the first field, and if the value of the first field is the first value, it can be determined that the third field carries the first indication information. In this way, the terminal device can continue to read the value of the third field and determine the transmission parameter for the target information according to the value of the third field.

In the embodiments of the present disclosure, the terminal device may determine the transmission parameter(s) corresponding to the value of the third field according to a correspondence between preset values of the third field and the transmission parameters. The correspondence between the values and the transmission parameters may be configured by a high layer or pre-agreed between the network side and the terminal device, which is not limited in the embodiments of the present disclosure.

Therefore, in the embodiments of the present disclosure, the transmission parameter for the target information may be indicated by redefining the meaning of the fields in the original signaling structure. In this way, the transmission parameter for the target information may be determined compatible with the existing signaling framework, and the complexity of receiving and processing of the terminal device is reduced.

Optionally, the network device may directly indicate the transmission parameter for the target information to the terminal device through the second field in the MAC layer signaling.

In other words, the network device may indicate transmission parameters through a value of the repetition indication field. In this way, the terminal device may determine the transmission parameter for the target information according to the value of the second field. The terminal device may determine the transmission parameters corresponding to the value of the second field according to a correspondence between preset values of the second field and the transmission parameters. The correspondence between the values and the transmission parameters may be configured by a high layer or pre-agreed between the network side and the terminal device, which is not limited in the embodiments of the present disclosure.

As an example, the network device may indicate the aggregation factor of PUSCH corresponding to Msg3 through a value of the repetition indication field. If the value of the repetition indication field is 0, it indicates that PUSCH corresponding to Msg3 will not repeatedly transmitted; if the value of the repetition indication field is 4, it indicates that the aggregation factor of PUSCH corresponding to Msg3 is 4 time domain units. That is, the PUSCH corresponding to Msg3 is repeatedly transmitted for 4 time domain units.

Optionally, the network device may use the first field and the second field in the MAC layer signaling simultaneously to indicate the transmission parameter for the target information to the terminal device.

In an embodiment of the present disclosure, the network device may indicate whether the second field in the MAC layer signaling is used to carry the first indication information through the first field.

Specifically, when the first field is set to the first value (for example, 0 or 1), it indicates that the second field in the MAC layer signaling carries the first indication information; when the value of the second field is set to the second value (for example, 1 or 0), it indicates that the first indication is not carried in the MAC layer signaling. The first value is different from the second value.

Correspondingly, after receiving the MAC layer signaling, the terminal device may first read the value of the first field, and when the first field is the first value, the terminal device reads the value of the second field in the MAC layer signaling to determine the transmission parameter for the target information.

Therefore, in the embodiments of the present disclosure, the newly added dedicated field may be used to indicate the transmission parameter for the target information, which can avoid the influence on the fields in the existing signaling structure.

In an embodiment of the present disclosure, the transmission parameter for the target information may also be implicitly indicated by DCI or random access response (RAR) information (i.e. Msg2).

In a possible implementation, the network device may implicitly indicate the transmission parameter for the target information through timing advance (TA) information in the RAR.

Specifically, the network device sends TA information to the terminal device, the TA information being used for uplink synchronization, and the TA information being further used for representing the first indication information.

In this way, after receiving the TA information, the terminal device may not only determine the number of TAs for uplink data synchronization, but also determine the transmission parameter for the target information based on the TA information.

Optionally, if the transmission parameter includes the aggregation factor for transmitting the target information, the terminal device may determine an aggregation factor corresponding to the TA information based on the correspondence between the number of units of TA and aggregation factors.

As an example, the correspondence between the number of units of TA and the aggregation factors may be as follows. When the number of units of TA does not exceed +-Y, the corresponding aggregation factor is 1.

When the number of units of TA exceeds +-Y and does not exceed +-W, the corresponding aggregation factor is 2.

When the number of units of TA exceeds +-W and does not exceed +-V, the corresponding aggregation factor is 4.

When the number of units of TA exceeds +-V, the corresponding aggregation factor is 8.

In embodiments of the present disclosure, the correspondence between the number of units of TA and the aggregations factors may be pre-configured or pre-agreed between the network side and the terminal device, which is not limited in the embodiments of the present disclosure.

In another possible implementation, the network device may implicitly indicate the transmission parameter for target information through resource scheduling information in RAR.

Specifically, the network device sends resource scheduling information to the terminal device. The resource scheduling information is used for scheduling uplink transmission resources for the Msg3, specifically uplink frequency domain resources. In addition, the resource scheduling information is further used for representing the first indication information.

In this way, after receiving the resource scheduling information, the terminal device may determine not only the uplink transmission resources for Msg3, but also determine the transmission parameter for the target information based on the resource scheduling information.

Optionally, if the transmission parameter includes the aggregation factor for transmitting the target information, the terminal device may determine an aggregation factor corresponding to the number of resource blocks carried in the resource scheduling information based on a correspondence between the number of resource blocks and aggregation factors.

As an example, the correspondence between the number of resource blocks (RB) and the aggregation factors may be as follows.

When the number of RBs is less than or equal to Y, the corresponding aggregation factor is 1.

When the number of RBs is greater than Y and less than or equal to W, the corresponding aggregation factor is 2.

When the number of RBs is greater than W and less than or equal to V, the corresponding aggregation factor is 4.

When the number of RBs is greater than V, the corresponding aggregation factor is 8.

In the embodiments of the present disclosure, the correspondence between the number of resource blocks and the aggregations factors may be pre-configured or pre-agreed between the network side and the terminal device, which is not limited in the embodiments of the present disclosure.

In yet another possible implementation, the network device may use the DCI information to indicate the transmission parameter(s) for the target information.

With reference to fields in the DCI format 1_0 illustrated in Table 1. The DCI format 1_0 may include a frequency domain resource assignment field, a time-frequency resource assignment field, a virtual resource block to physical resource block mapping (VRB-to-PRB mapping) field, a modulation and coding scheme field, a transport block scaling (TB scaling) field, and the least significant bits (LSB) of system frame number (SFN) field.

The length of the frequency domain resource assignment resource field is

$$-\log_2(N_{RB}^{DL,BWP}(N_{RB}^{DL,BWP} + 1)/2)$$ bit. When the control-resource set #0 (CORESET#0) has a high-level configuration, $N_{RB}^{DL,BWP}$ is equal to the size of CORESET#0. When CORESET#0 is not configured, $N_{RB}^{DL,BWP}$ is equal to the initial downlink band width part (BWP).

The time-frequency resource assignment field includes 4 bits, and the VRB-to-PRB mapping field includes 1 bit, which is used to represent discrete or continuous PRB mapping. The modulation and coding scheme field includes 5 bits, which is used to represent modulation order. The TB scaling field includes 2 bits. The LSBs of SFN field contains two bits when DCI is scrambled using MsgB-RNTI and RA-RNTI under shared spectrum, otherwise the LSBs of SFN field is not carried.

Table 1

| Field | Definition |
|---|---|
| - Frequency domain resource assignment | $-\log_2(N_{RB}^{DL,BWP}(N_{RB}^{DL,BWP}+1)/2)$ bits $N_{RB}^{DL,BWP}$ is equal to the size of CORESET# 0, if CORESET#0 has a high-layer configuration $N_{RB}^{DL,BWP}$ is equal to the initial downlink BWP, if CORESET#0 is not configured |
| - Time domain resource assignment | -4 bits |
| - VRB-to-PRB mapping | - 1 bit, representing discrete or continuous PRB mapping |
| - Modulation and coding scheme | - 5 bits, modulation order |
| - TB scaling | - 2 bits, TB scaling factor the smaller it is, |
| - LSBs of SFN | - 2 bits, used for MsgB-RNTI and RA-RNTI under shared spectrum 0 bit, for other situation |

Specifically, the network device may implicitly indicate the transmission parameter for the target information by the TB scaling factor in the DCI format described above. That is, the TB scaling field may indicate both the TB scaling factor and the transmission parameter for the target information.

Specifically, the network device may send PDCCH DCI to the terminal device. The DCI may be scrambled using random access-radio network temporary identifier (RA-RNTI), or RNTI for 2-step random access (i.e. non-contention random access) (MsgB-RNTI), or other RNTI.

Correspondingly, after receiving the PDCCH DCI from the network device, the terminal device may decode the TB scaling field to determine the transmission parameter for the target information.

Optionally, the terminal device may determine an aggregation factor corresponding to a TB scaling factor in the PDCCH DCI based on the correspondence between preset TB scaling factors and the aggregation factors.

To sum up, in the embodiments of the present disclosure, the transmission parameter for the target information may be indicated by reusing the meaning of the fields in the original signaling structure. In this way, the transmission parameters for the target information may be determined compatible with the existing signaling framework, and the complexity of receiving and processing of the terminal device is reduced.

In an embodiment of the present disclosure, there is also provided a terminal device. As illustrated in the schematic structure diagram of the terminal device in FIG. 8, the terminal device includes a first communication unit 801.

The first communication unit 801 is configured to receive first indication information, the first indication information being used for indicating a transmission parameter for target information during a random access procedure; and transmit the target information based on the transmission parameter during the random access procedure.

Optionally, the target information includes at least one of:

data information and/or control information of random access message 2 (Msg2);
data information and/or control information of random access message 3 (Msg3);
data information and/or control information of random access message 4 (Msg4); and
control information of a feedback message corresponding to the Msg4.

Optionally, the transmission parameter includes at least one of:

an aggregation factor for transmitting the target information;
a frequency domain position of frequency hopping for transmitting the target information;
a modulation parameter for transmitting the target information; and
resources for transmitting the target information.

Optionally, the first indication information is carried by a medium access control (MAC) layer signaling.

Optionally, the first communication unit 801 is further configured to receive the MAC layer signaling. The MAC layer signaling includes a first field and a second field, the first field is a reserved field for the MAC layer signaling, and the second field is a dedicated field for the MAC layer signaling;

The terminal device further includes a first processing unit, and the first processing unit is configured to determine the first indication information based on at least one of the first field or the second field.

Optionally, when a value of the first field is a first value, the first field is used to indicate that the second field in the MAC layer signaling carries the first indication information.

The first processing unit is configured to: in response to the value of the first indication field being the first value, acquire the first indication information based on the second field of the MAC layer signaling.

Optionally, when a value of the first field is a first value, the first field is used to indicate that a third field in the MAC layer signaling carries the first indication information; and when the value of the first field is a second value, the first field is used to indicate that the third field carries at least one of uplink grant information, timing advance information and temporary identification information.

The first processing unit is further configured to: in response to the value of the first indication field being the first value, acquire the first indication information based on the third field of the MAC layer signaling.

Optionally, the first field is a reserved bit R or a reserved channel state information (CSI) request field in the MAC layer signaling.

Optionally, the first communication unit 801 is configured to receive timing advance information by the terminal device. The timing advance information is used for uplink synchronization.

The first processing unit is configured to determine the first indication information based on the timing advance information by the terminal device.

Optionally, the first processing unit is configured to determine an aggregation factor corresponding to the timing advance information based on a correspondence between the number of units of timing advance and aggregation factors.

Optionally, the first communication unit 801 is configured to receive resource scheduling information. The resource scheduling information is used for scheduling uplink resources for the Msg3.

The first processing unit is configured to determine the first indication information based on the resource scheduling information.

Optionally, the first processing unit is configured to determine an aggregation factor corresponding to the number of resource blocks carried in the resource scheduling information based on a correspondence between the number of resource blocks and aggregation factors.

Optionally, the first communication unit 801 is further configured to receive downlink control information (DCI) from a network device. The DCI includes a transport block scaling factor.

The first processing unit is configured to determine the first indication information based on the transport block scaling factor.

Optionally, the first communication unit 801 is further configured to send a random access message 1 (Msg1) to a network device. The Msg1 includes a random access preamble sequence.

It should be noted that each functional unit in the embodiments of the present disclosure may be integrated in one processing module, each unit may exist physically alone, or two or more units may be integrated in one module. The above integrated module may be implemented in the form of not only hardware but also a software functional module.

If the integrated module is implemented in the form of a software functional module and is not sold or used as a stand-alone product, the integrated module may be stored in a computer readable storage medium. Based on this understanding, the technical solutions of the embodiments of the present disclosure, in essence or the part contributing to the prior art, or the whole or part of the technical solutions may be embodied in the form of a software product. The computer software product is stored in a storage medium, and includes several instructions so that a computer device (which may be a personal computer, a server, a network device or the like) or a processor implements all or part of the method of embodiments of the present disclosure. The aforementioned storage medium includes various media capable of storing a program code such as a USB disk, a mobile hard drive disk, a read-only memory (ROM), a random access memory (RAM), a magnetic disk or an optical disk.

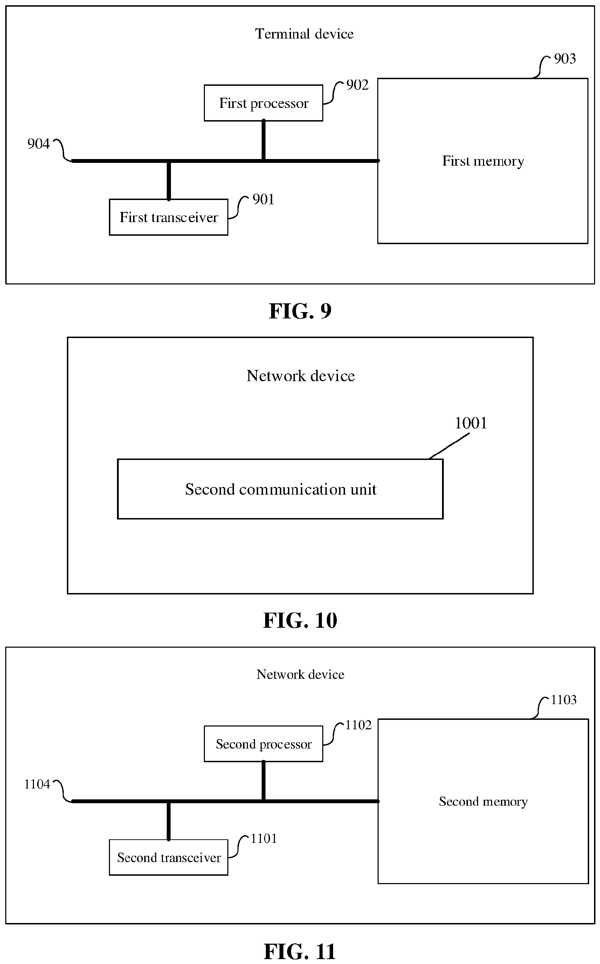

Based on the foregoing embodiments, another embodiment of the present disclosure also provides a terminal device. As illustrated in FIG. 9, the terminal device provided in the embodiments of the present disclosure may include: a first transceiver 901, a first processor 902, a first memory 903 storing instructions executable by the first processor 902.

The first transceiver 901, the first processor 902 and the first memory 903 communicate through a first communication bus 904.

The first transceiver 901 is configured to execute, when running the computer program stored in the first memory 903, the following instructions: receiving first indication information, the first indication information being used for indicating a transmission parameter for target information during a random access procedure; and transmitting the target information based on the transmission parameter during the random access procedure.

Optionally, the first transceiver 901 is further configured to execute the following instruction: receiving MAC layer signaling. The MAC layer signaling includes a first field and a second field, the first field is a reserved field of the MAC layer signaling, and the second field is a dedicated field of the MAC layer signaling.

The first processor 902 is configured to execute, when running the computer program stored in the memory 903, the following instruction: determining the first indication information based on at least one of the first field or the second field.

Optionally, when a value of the first field is a first value, the first field is used to indicate that the second field in the MAC layer signaling carries the first indication information.

The first processor 902 is further configured to execute the following instruction: in response to the value of the first indication field being the first value, acquiring the first indication information based on the second field of the MAC layer signaling.

Optionally, when a value of the first field is a first value, the first field is used to indicate that a third field in the MAC layer signaling carries the first indication information; and when the value of the first field is a second value, the first field is used to indicate that the third field carries at least one of uplink grant information, timing advance information and temporary identification information.

Based on this, the first processor 902 is further configured to execute the following instruction: in response to the value of the first indication field being the first value, acquiring the first indication information based on the third field of the MAC layer signaling.

Optionally, the first transceiver 901 is further configured to execute the following instruction: receiving timing advance information. The timing advance information is used for uplink synchronization.

The first processor 902 is further configured to execute the following instruction: determining the first indication information based on the timing advance information.

Optionally, the first processor 902 is further configured to execute the following instructions: determining an aggregation factor corresponding to the timing advance information based on a correspondence between the number of units of timing advance and aggregation factors.

Optionally, the first transceiver 901 is further configured to execute the following instruction: receiving resource scheduling information. The resource scheduling information is used for scheduling uplink resources for the Msg3.

The first processor 902 is further configured to execute the following instruction: determining the first indication information based on the resource scheduling information.

Optionally, the first processor 902 is further configured to execute the following instruction: determining an aggregation factor corresponding to the number of resource blocks carried in the resource scheduling information by the terminal device based on a correspondence between the number of resource blocks and aggregation factors.

Optionally, the first transceiver 901 is further configured to execute the following instruction: receiving downlink control information (DCI) from a network device. The DCI includes a transport block scaling factor.

The first processor 902 is further configured to execute the following instruction: determining the first indication information based on the transport block scaling factor.

Optionally, the first transceiver 901 is further configured to execute the following instruction: sending a random access message 1 (Msg1) to a network device. The Msg1 includes a random access preamble sequence.

In summary, the terminal device provided by the embodiments of the present disclosure may receive first indication information, the first indication information being used for indicating a transmission parameter for target information during a random access procedure; and the terminal device transmits the target information based on the transmission parameter during the random access procedure. That is, the terminal device may determine a transmission manner of information in the random access procedure according to the first indication information, thereby realizing flexible random access and improving transmission coverage.

In an embodiment of the present disclosure, there is also provided a network device. As illustrated in the FIG.10, the network device includes a second communication unit 1001.

The second communication unit 1001 is configured to send first indication information, the first indication information being used for indicating a transmission parameter for target information during a random access procedure; and transmit the target information based on the transmission parameter.

Optionally, the target information includes at least one of:

data information and/or control information of random access message 2 (Msg2);
data information and/or control information of random access message 3 (Msg3);
data information and/or control information of random access message 4 (Msg4); and
control information of a feedback message corresponding to the Msg4.

Optionally, the transmission parameter includes at least one of:

an aggregation factor for transmitting the target information;
a frequency domain position of frequency hopping for transmitting the target information;
a modulation parameter for transmitting the target information; and
resources for transmitting the target information.

Optionally, the first indication information is carried by a medium access control (MAC) layer signaling.

Optionally, the network device may also include a second processing unit;

Optionally, the second processing unit is further configured to carry the first indication information through at least one of a first field or a second field in the MAC layer signaling. The first field is a reserved field for the MAC layer signaling, and the second field is a dedicated field for the MAC layer signaling.

The second communication unit 1001 is configured to transmit the MAC layer signaling.

Optionally, the second processing unit is further configured to set a value of the first field as a first value to indicate that the second field in the MAC layer signaling carries the first indication information; and carry the first indication information through the second field.

Optionally, the second processing unit is further configured to set a value of the first field as a first value to indicate that a third field in the MAC layer signaling carries the first indication information. When the value of the first field is a second value, it indicates that the third field carries at least one of uplink grant information, timing advance information and temporary identification information. The network device carries the first indication information through the third field in the MAC layer signaling.

Optionally, the first field is a reserved bit R or a reserved channel state information (CSI) request field in the MAC layer signaling.

Optionally, the first communication unit 1001 is configured to send timing advance information by the network device. The timing advance information is used for uplink synchronization; and the timing advance information is further used for representing the first indication information.

Optionally, the second communication unit 1001 is configured to send resource scheduling information. The resource scheduling information is used for scheduling uplink resources for the Msg 3, and the resource scheduling information is further used for representing the first indication information.

Optionally, the second communication unit 1001 is configured to send downlink control information (DCI). The DCI includes a transport block scaling factor, and the transport block scaling factor is used for representing the first indication information.

Optionally, the second communication unit 1001 is configured to receive a random access message 1 (Msg1) from a terminal device. The Msg1 includes a random access preamble sequence.

Optionally, the second communication unit is further configured to determine the first indication information based on the random access preamble sequence.

It should be noted that each functional unit in the embodiments of the present disclosure may be integrated in one processing module, or each unit may exist physically alone, or two or more units may be integrated in one module. The above integrated module may be implemented in the form of not only hardware but also a software functional module.

If the integrated module is implemented in the form of a software functional module and is not sold or used as a stand-alone product, the integrated module may be stored in a computer readable storage medium. Based on this understanding, the technical solutions of the embodiments of the present disclosure, in essence or the part contributing to the prior art, or the whole or part of the technical solutions may be embodied in the form of a software product. The computer software product is stored in a storage medium, and includes several instructions so that a computer device (which may be a personal computer, a server, a network device or the like) or a processor implements all or part of the method of embodiments of the present disclosure. The aforementioned storage medium includes various media capable of storing a program code such as a USB disk, a mobile hard drive disk, a read-only memory (ROM), a random access memory (RAM), a magnetic disk or an optical disk.

Based on the foregoing embodiments, another embodiment of the present disclosure also provides a network device. As illustrated in FIG. 11, the network device provided in the embodiments of the present disclosure may include: a second transceiver 1101, a second processor 1102, a second memory 1103 storing instructions executable by the second processor.

The second transceiver 1101, the second processor 1102 and the second memory 1103 communicate through a second communication bus 1104.

The second transceiver 1101 is configured to execute, when running the computer program stored in the second memory 1103, the following instructions: sending first indication information, the first indication information being used for indicating a transmission parameter for target information during a random access procedure; and transmitting the target information based on the transmission parameter.

Optionally, the second processor 1102 is configured to execute, when running the computer program stored in the second memory 1103, the following instruction: carrying the first indication information through at least one of a first field or a second field in the MAC layer signaling. The first field is a reserved field for the MAC layer signaling, and the second field is a dedicated field for the MAC layer signaling.

The second transceiver 1101 is further configured to execute the following instruction: sending the MAC layer signaling.

Optionally, the second processor 1102 is further configured to execute the following instructions: setting a value of the first field as a first value by the network device to indicate that the second field in the MAC layer signaling carries the first indication information; and carrying the first indication information through the second field by the network device.

Optionally, the second processor 1102 is further configured to execute the following instructions: setting a value of the first field as a first value to indicate that a third field in the MAC layer signaling carries the first indication information, wherein when the value of the first field is a second value, the first field is used to indicate that the third field carries at least one of uplink grant information, timing advance information and temporary identification information; and carrying the first indication information through the third field in the MAC layer signaling.

Optionally, the second transceiver 1101 is configured to execute the following instruction: sending timing advance information. The timing advance information is used for uplink synchronization; and the timing advance information is further used for representing the first indication information.

Optionally, the second transceiver 1101 is configured to execute the following instruction: sending resource scheduling information. The resource scheduling information is used for scheduling uplink resources for the Msg 3, and the resource scheduling information is further used for representing the first indication information.

Optionally, the second transceiver 1101 is configured to execute the following instruction: sending downlink control information (DCI). The DCI includes a transport block scaling factor, and the transport block scaling factor is used for representing the first indication information.

Optionally, the second transceiver 1101 is further configured to execute the following instruction: receiving a random access message 1 (Msg1) from a terminal device. The Msg1 includes a random access preamble sequence.

The second processor 1102 is further configured to execute the following instruction: determining the first indication information based on the transport block scaling factor.

In summary, the network device provided by the embodiments of the present disclosure may send first indication information to the terminal device, the first indication information being used for indicating a transmission parameter for target information during a random access procedure; and transmit the target information based on the transmission parameter. That is, the terminal device may determine a transmission manner of information in the random access procedure according to the first indication information, thereby realizing flexible random access and improving transmission coverage.

It will be appreciated that the memory in the embodiments of the present disclosure may be a volatile memory or a non-volatile memory, or may also include both a volatile memory and a non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be disk storage or magnetic tape memory. The volatile memory may be a random access memory (RAM), which serves as an external cache. By way of illustration but not limitation, many forms of RAM are available, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), a direct rambus random access memory (DRRAM). The memory described in embodiments of the present disclosure is intended to include but not limited to these and any other suitable types of memory.

In embodiments of the present disclosure, there is further provided a computer storage medium, specifically a computer-readable storage medium having computer instructions stored thereon. As a first implementation, when the computer storage medium is located at the terminal, the computer instruction is executed by the processor to implement any operation of the method for transmitting information in the embodiments of the present disclosure.

It should be understood that in various embodiments of the present disclosure, the size of the sequence number of the above-mentioned processes does not mean the order of execution, and the execution order of each process should be determined by its function and inherent logic, and should not be limited in any way to the implementation process of the embodiments of the present disclosure.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it should be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, each functional unit in each embodiment of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

**Claims**

1. A method for transmitting information, comprising:

   receiving, by a terminal device, first indication information, wherein the first indication information is used for indicating a transmission parameter for target information during a random access procedure; and
   transmitting, by the terminal device, the target information based on the transmission parameters during the random access procedure.

2. The method of claim 1, wherein the target information comprises at least one of:

   data information and/or control information of random access message 2 (Msg2);
   data information and/or control information of random access message 3 (Msg3);
   data information and/or control information of random access message 4 (Msg4); and
   control information of a feedback message corresponding to the Msg4.

3. The method of claim 1 or 2, wherein the transmission parameter comprises at least one of:

   an aggregation factor for transmitting the target information;
   a frequency domain position of frequency hopping for transmitting the target information;
   a modulation parameter for transmitting the target information; and
   resources for transmitting the target information.

4. The method of any one of claims 1 to 3, wherein the first indication information is carried by a medium access control (MAC) layer signaling.

5. The method of claim 4, wherein receiving, by the terminal device, the first indication information comprises:

   receiving, by the terminal device, the MAC layer signaling, wherein the MAC layer signaling comprises a first field and a second field, the first field being a reserved field for the MAC layer signaling, and the second field being a dedicated field for the MAC layer signaling; and
   determining, by the terminal device, the first indication information based on at least one of the first field or the second field.

6. The method of claim 5, wherein when a value of the first field is a first value, the first field is used to indicate that the second field in the MAC layer signaling carries the first indication information; and

wherein determining the first indication information based on at least one of the first field or the second field comprises: in response to the value of the first indication field being the first value, acquiring, by the terminal device, the first indication information based on the second field of the MAC layer signaling.

7. The method of claim 5, wherein when a value of the first field is a first value, the first field is used to indicate that a third field in the MAC layer signaling carries the first indication information; and when the value of the first field is a second value, the first field is used to indicate that the third field carries at least one of uplink grant information, timing advance information and temporary identification information; and

wherein determining the first indication information based on the first field comprises: in response to the value of the first indication field being the first value, acquiring, by the terminal device, the first indication information based on the third field of the MAC layer signaling.

8. The method of any one of claims 5 to 7, wherein the first field is a reserved bit R in the MAC layer signaling, or a reserved channel state information (CSI) request field.

9. The method of any one of claims 1 to 3, wherein receiving, by the terminal device, the first indication information comprises:

receiving, by the terminal device, timing advance information, wherein the timing advance information is used for uplink synchronization; and

determining, by the terminal device, the first indication information based on the timing advance information.

10. The method of claim 9, wherein the transmission parameter comprises the aggregation factor for transmitting the target information, and determining the first indication information based on the timing advance information comprises:

determining, by the terminal device, an aggregation factor corresponding to the timing advance information based on a correspondence between a number of units of timing advance and aggregation factors.

11. The method of any one of claims 1 to 3, wherein receiving, by the terminal device, the first indication information comprises:

receiving, by the terminal device, resource scheduling information, wherein the resource scheduling information is used for scheduling uplink resources for the Msg3; and

determining, by the terminal device, the first indication information based on the resource scheduling information.

12. The method of claim 11, wherein the transmission parameter comprises the aggregation factor for transmitting the target information, and determining the first indication information based on the resource scheduling information comprises:

determining, by the terminal device, an aggregation factor corresponding to a number of resource blocks carried in the resource scheduling information based on a correspondence between a number of resource blocks and aggregation factors.

13. The method of any one of claims 1 to 3, wherein receiving, by the terminal device, the first indication information comprises:

receiving, by the terminal device, downlink control information (DCI), wherein the DCI comprises a transport block scaling factor; and

determining, the first indication information based on the transport block scaling factor.

14. The method of any one of claims 1 to 13, wherein the method comprises: before receiving, by the terminal device, the first indication information,

sending a random access message 1 (Msg1) to a network device, wherein the Msg1 comprises a random access preamble sequence.

**15.** A method for transmitting information, comprising:

sending, by a network device, first indication information, wherein the first indication information is used for indicating a transmission parameter for target information during a random access procedure; and transmitting, by the network device, the target information based on the transmission parameter.

**16.** The method of claim 15, wherein the target information comprises at least one of:

data information and/or control information of random access message 2 (Msg2);
data information and/or control information of random access message 3 (Msg3);
data information and/or control information of random access message 4 (Msg4); and
control information of a feedback message corresponding to the Msg4.

**17.** The method of claim 15 or 16, wherein the transmission parameter comprises at least one of:

an aggregation factor for transmitting the target information;
a frequency domain position of frequency hopping for transmitting the target information;
a modulation parameter for transmitting the target information; and
resources for transmitting the target information.

**18.** The method of any one of claims 15 to 17, wherein the first indication information is carried by a medium access control (MAC) layer signaling.

**19.** The method of claim 18, wherein sending the first indication information comprises:

carrying, by the network device, the first indication information through at least one of a first field or a second field in the MAC layer signaling, wherein the first field is a reserved field for the MAC layer signaling, and the second field is a dedicated field for the MAC layer signaling; and
sending, by the network device, the MAC layer signaling.

**20.** The method of claim 19, wherein carrying the first indication information through at least one of the first field or the second field in the MAC layer signaling comprises:

setting, by the network device, a value of the first field as a first value to indicate that the second field in the MAC layer signaling carries the first indication information; and
carrying, by the network device, the first indication information through the second field.

**21.** The method of claim 19, wherein carrying the first indication information through the first field in the MAC layer signaling comprises:

setting, by the network device, a value of the first field as a first value to indicate that a third field in the MAC layer signaling carries the first indication information, wherein when the value of the first field is a second value, the first field is used to indicate that the third field carries at least one of uplink grant information, timing advance information and temporary identification information; and
carrying, by the network device, the first indication information through the third field in the MAC layer signaling.

**22.** The method of any one of claims 19 to 21, wherein the first field is a reserved bit R in the MAC layer signaling, or a reserved channel state information (CSI) request field.

**23.** The method of any one of claims 15 to 17, wherein sending, by the network device, the first indication information comprises:
sending, by the network device, timing advance information, wherein the timing advance information is used for uplink synchronization, and the timing advance information is further used for representing the first indication information.

**24.** The method of any one of claims 15 to 17, wherein sending, by the network device, the first indication information comprises:
sending, by the network device, resource scheduling information, wherein the resource scheduling information is used for scheduling uplink resources for the Msg 3, and the resource scheduling information is further used for representing the first indication information.

25. The method of any one of claims 15 to 17, wherein sending, by the network device, the first indication information comprises:

sending, by the network device, downlink control information (DCI), wherein the DCI comprises a transport block scaling factor, and the transport block scaling factor is used for representing the first indication information.

26. The method of any one of claims 15 to 25, wherein the method further comprises: before sending, by the network device, the first indication information,

receiving a random access message 1 (Msg1) from a terminal device, wherein the Msg1 comprises a random access preamble sequence.
determining the first indication information based on the random access preamble sequence.

27. A terminal device, comprising:
a first communication unit, configured to receive first indication information, wherein the first indication information is used for indicating a transmission parameter for target information during a random access procedure; and transmit the target information based on the transmission parameter during the random access procedure.

28. A network device, comprising:
a second communication unit, configured to send first indication information, wherein the first indication information is used for indicating a transmission parameter for target information during a random access procedure; and transmit the target information based on the transmission parameter.

29. A terminal device, comprising: a first transceiver, a first processor, and a first memory for storing a computer program;

wherein the first transceiver, the first processor and the first memory communicate through a first communication bus;
the first processor is configured to communicate with a network device through the first transceiver; and
the first processor is further configured to cooperate with the first transceiver to implement, when running the computer program stored in the first memory, the operations of the method of any of claims 1 to 14.

30. A network device, comprising a second transceiver, a second processor, and a second memory for storing a computer program;

wherein the second transceiver, the second processor and the second memory communicate through a second communication bus;
the second processor is configured to communicate with a terminal device through the second transceiver; and
the second processor is further configured to cooperate with the second transceiver to implement, when running the computer program stored in the second memory, the operations of the method of any one of claims 15 to 26.

31. A computer-readable storage medium, having stored thereon a computer program, wherein the computer program is executed by a first processor to implement the operations of the method of any one of claims 1 to 14; or the computer program is executed by a second processor to implement the operations of the method of any one of claims 15 to 26.

Terminal
device

Network
device

Msg1 →

← Msg2

Msg3 →

← Msg4

**FIG. 1**

200

210

220

220

**FIG. 2**

```
┌──────────────────┐                          ┌──────────────────┐
│  Terminal device │                          │  Network device  │
└────────┬─────────┘                          └────────┬─────────┘
         │                                     ┌────────┴──────────────────────┐
         │                                     │ 310: Sending first indication │
         │                                     │ information that is used for  │
         │                                     │ indicating a transmission     │
         │                                     │ parameter for target          │
         │                                     │ information during a          │
         │                                     │ random access procedure       │
         │                                     └────────┬──────────────────────┘
         │         First indication information         │
         │ ◄────────────────────────────────────────── │
┌────────┴──────────────────────┐                       │
│ 320: Receiving the first      │                       │
│ indication information that   │                       │
│ is used for indicating the    │                       │
│ transmission parameter for    │                       │
│ the target information during │                       │
│ the random access procedure   │                       │
└────────┬──────────────────────┘                       │
┌────────┴──────────────────────┐      ┌────────────────┴──────────────┐
│ 340: Transmitting the target  │      │ 330: Transmitting the target  │
│ information based on the      │      │ information based on the      │
│ transmission parameter and    │      │ transmission parameter        │
│ sending first indication      │      │                               │
│ information                   │      │                               │
└────────┬──────────────────────┘      └────────────────┬──────────────┘
         │                                               │
```

# FIG. 3

| Repetition data 0 | Repetition data 1 | Repetition data 2 | Repetition data 3 |

Slot 0          Slot 1          Slot 2          Slot 3

■ UL symbol    ▨ DL symbol    ☐ Guard interval or flexible symbol    ⸬ Actual no transmission    ☐ Actual transmission

**FIG. 4**

FIG. 5

```
        ┌─────────────────┐                          ┌─────────────────┐
        │ Terminal device │                          │ Network device  │
        └────────┬────────┘                          └────────┬────────┘
   ┌─────────────┴─────────────┐                              │
   │ 350:Sending Msg1, Msg1    │                              │
   │  including a random       │                              │
   │  access preamble sequence │                              │
   └─────────────┬─────────────┘          Msg1                │
                 │──────────────────────────────────────────▶│
                 │                              ┌─────────────┴─────────────┐
                 │                              │ 360:Receiving Msg1        │
                 │                              └─────────────┬─────────────┘
                 │                              ┌─────────────┴─────────────┐
                 │                              │ 370:Determining the first │
                 │                              │  indication information   │
                 │                              │  based on the random      │
                 │                              │  access preamble sequence │
                 │                              └─────────────┬─────────────┘
                 │                              ┌─────────────┴─────────────┐
                 │                              │ 310:Sending first         │
                 │                              │  indication information   │
                 │                              │  that is used for         │
                 │                              │  indicating a transmission│
                 │                              │  parameter for target     │
                 │                              │  information during a      │
                 │                              │  random access procedure  │
                 │   First indication           └─────────────┬─────────────┘
                 │   information                               │
                 │◀─────────────────────────────────────────── │
   ┌─────────────┴─────────────┐                              │
   │ 320:Receiving the first   │                              │
   │  indication information    │                              │
   │  that is used for          │                              │
   │  indicating the            │                              │
   │  transmission parameter    │                              │
   │  for the target            │                              │
   │  information during the    │                              │
   │  random access procedure   │                              │
   └─────────────┬─────────────┘                              │
   ┌─────────────┴─────────────┐              ┌─────────────┴─────────────┐
   │ 340:Transmitting the      │              │ 330:Transmitting the      │
   │  target information based  │              │  target information based  │
   │  on the transmission       │              │  on the transmission       │
   │  parameter and sending     │              │  parameter                 │
   │  first indication          │              └─────────────┬─────────────┘
   │  information               │                              │
   └─────────────┬─────────────┘                              │
                 │                                             │
```

**FIG. 6**

Bit

| R | Timing advance command | |
| Timing advance command | | UL grant |
| UL grant | | |
| UL grant | | |
| UL grant | | |
| Temporary C-RNTI | | |
| Temporary C-RNTI | | |
| Repetition Indication | | |

Byte

**FIG. 7**

Terminal device

801

First communication unit

**FIG. 8**

Terminal device

First processor 902

903

First memory

904

First transceiver 901

**FIG. 9**

Network device

1001

Second communication unit

**FIG. 10**

Network device

Second processor 1102

1103

Second memory

1104

Second transceiver 1101

**FIG. 11**

## INTERNATIONAL SEARCH REPORT

International application No.

**PCT/CN2021/071551**

### A. CLASSIFICATION OF SUBJECT MATTER

H04W 74/08(2009.01)i

According to International Patent Classification (IPC) or to both national classification and IPC

### B. FIELDS SEARCHED

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

VEN, CNKI, CNABS, DWPI, CNTXT, USTXT, EPTXT, WOTXT, IEEE, 3GPP: 指示信息, 随机接入, 第二消息, 第三消息, 第四消息, Msg3, 目标信息, 传输参数, 重复因子, 频域位置, 调制参数, 资源, Indication Information, random access, second message, third message, fourth message, Msg3, target information, transmission parameters, repetition factor, frequency domain location, modulation parameters, resource

### C. DOCUMENTS CONSIDERED TO BE RELEVANT

| Category* | Citation of document, with indication, where appropriate, of the relevant passages | Relevant to claim No. |
|---|---|---|
| X | CN 110012539 A (CHINA MOBILE COMMUNICATION CO., LTD. RESEARCH INSTITUTE; CHINA MOBILE COMMUNICATIONS GROUP CO., LTD.) 12 July 2019 (2019-07-12)<br>see description, paragraphs [0007]-[0096] | 1-31 |
| A | CN 110769516 A (VIVO COMMUNICATION TECHNOLOGY CO., LTD.) 07 February 2020 (2020-02-07)<br>entire document | 1-31 |
| A | CN 106973441 A (ZTE CORPORATION) 21 July 2017 (2017-07-21)<br>entire document | 1-31 |
| A | US 2019394075 A1 (TELEFONAKTIEBOLAGET LM ERICSSON (PUBL)) 26 December 2019 (2019-12-26)<br>entire document | 1-31 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 September 2021** | **17 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/071551**

| Patent document cited in search report | | | Publication date (day/month/year) | Patent family member(s) | | | Publication date (day/month/year) |
|---|---|---|---|---|---|---|---|
| CN | 110012539 | A | 12 July 2019 | None | | | |
| CN | 110769516 | A | 07 February 2020 | WO | 2020020030 | A1 | 30 January 2020 |
| | | | | KR | 20210036952 | A | 05 April 2021 |
| | | | | SG | 11202100835V | A | 25 February 2021 |
| CN | 106973441 | A | 21 July 2017 | US | 2020367291 | A1 | 19 November 2020 |
| | | | | KR | 20180102630 | A | 17 September 2018 |
| | | | | EP | 3404991 | A1 | 21 November 2018 |
| | | | | EP | 3404991 | A4 | 21 November 2018 |
| | | | | CN | 106973441 | B | 17 January 2020 |
| | | | | EP | 3755110 | A1 | 23 December 2020 |
| | | | | US | 2019029051 | A1 | 24 January 2019 |
| | | | | EP | 3404991 | B1 | 22 July 2020 |
| | | | | JP | 2019508932 | A | 28 March 2019 |
| | | | | ES | 2809724 | T3 | 05 March 2021 |
| | | | | US | 10736149 | B2 | 04 August 2020 |
| | | | | CN | 111107662 | A | 05 May 2020 |
| US | 2019394075 | A1 | 26 December 2019 | US | 10419259 | B1 | 17 September 2019 |
| | | | | US | 10979269 | B2 | 13 April 2021 |

Form PCT/ISA/210 (patent family annex) (January 2015)